# EUROPEAN PATENT APPLICATION

(11) **EP 4 708 636 A1**
(43) Date of publication of application: **11.03.2026**
(21) Application number: 25195656.1
(22) Date of filing: 13.08.2025
(51) Int. Cl.: H02K 1/276, H02K 29/03

(54) **PERMANENT MAGNET ROTOR**

(30) Priority: 10.09.2024 JP 2024156686
(71) Applicant: KABUSHIKI KAISHA TOSHIBA, Kawasaki-shi, Kanagawa, 212-0013 (JP)
(72) Inventor: SHINTANI, Shogo, Kanagawa, 212-0013 (JP); AWAZU, Minoru, Kanagawa, 212-0013 (JP)
(74) Representative: AWA Sweden AB

(57) **Abstract**

A rotor of an embodiment includes: a rotor core in which permanent magnets are embedded; at least one first magnetic resistance portion that is formed on a side of an outer circumferential surface on a magnetic pole center axis of the rotor core; and at least a pair of second magnetic resistance portions that is formed on the side of the outer circumferential surface such that the second magnetic resistance portions sandwich the magnetic pole center axis.

## Description

### BACKGROUND OF THE INVENTION

### Field of the Invention

Embodiments of the present invention relate to a rotor of a magnet embedded-type rotating electrical machine.

### Description of the Related Art

As a type of rotating electrical machine, there is a permanent magnet embedded-type rotating electrical machine in which a plurality of permanent magnets for forming magnetic poles are embedded in a rotor core. It is known that in this type of rotating electrical machine, vibration and noise occur at the time of rotation of a rotor due to an electromagnetic force generated between the rotor and a stator, and there has been a demand to reduce the vibration and the noise. Hereinafter, such an electromagnetic force that causes vibration and noise will be referred to as an electromagnetic vibration force. In order to suppress the electromagnetic vibration force, a groove for causing a magnetic resistance, for example, may be formed on a side of an outer circumference of a rotor core, or as disclosed in Japanese Patent Laid-Open No. 2015-50803, for example, a hole may be formed on the side of the outer circumference.

However, if a groove as described above is formed in the rotor core, wind noise and a windage loss increase. Also, if a hole is formed as in Japanese Patent Laid-Open No. 2015-50803, an output torque decreases.

### BRIEF DESCRIPTION OF THE DRAWINGS

FIG. 1 illustrates a first embodiment and is a plan view illustrating a part of a rotor;
FIG. 2 is a plan view illustrating an entire rotating electrical machine;
FIG. 3 is a diagram illustrating each parameter of simulation;
FIG. 4 is a diagram illustrating (a) a ripple component of an electromagnetic vibration force, (b) an average value of a twenty fourth component, a forty eighth component, and a ninety sixth component, and (c) an average torque, in a case where a diameter (1) is changed;
FIG. 5 is a diagram corresponding to FIG. 4 in a case where a diameter (2) is changed;
FIG. 6 is a diagram corresponding to FIG. 4 in a case where a depth (1) is changed;
FIG. 7 is a diagram corresponding to FIG. 4 in a case where a depth (2) is changed;
FIG. 8 is a diagram corresponding to FIG. 4 in a case where an angle is changed;
FIG. 9 illustrates a second embodiment and is a diagram illustrating each parameter of simulation;
FIG. 10 is a diagram illustrating a torque and an electromagnetic vibration force in a case where a diameter (1) and a depth (1) are changed;
FIG. 11 is a diagram illustrating a torque and an electromagnetic vibration force in a case where a diameter (2), a depth (2), and an angle (2) are changed;
FIG. 12 is a diagram illustrating a torque and an electromagnetic vibration force in a case where a diameter (2)', a depth (2)', and an angle (2)' are changed;
FIG. 13 is a diagram illustrating a torque and an electromagnetic vibration force of each plot illustrated in FIGS. 10 to 12 in a case where the shapes of holes (2) are symmetric and in a case where the shapes of the holes (2) are asymmetric; and
FIG. 14 illustrates a third embodiment and is a plan view illustrating a part of a rotor.

### DETAILED DESCRIPTION OF THE INVENTION

Thus, a rotor of a permanent magnet embedded-type rotating electrical machine capable of reducing an electromagnetic vibration force without increasing wind noise and a windage loss and capable of minimizing a decrease in output torque will be provided.

A rotor of an embodiment includes: a rotor core in which permanent magnets are embedded; at least one first magnetic resistance portion that is formed on a side of an outer circumferential surface on a magnetic pole center axis of the rotor core; and at least a pair of second magnetic resistance portions that is formed on the side of the outer circumferential surface such that the second magnetic resistance portions sandwich the magnetic pole center axis.

### (First Embodiment)

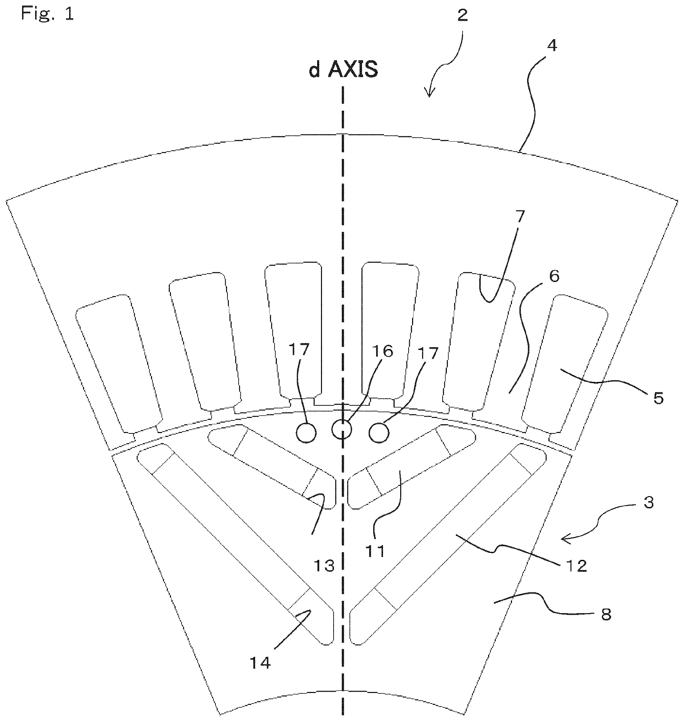

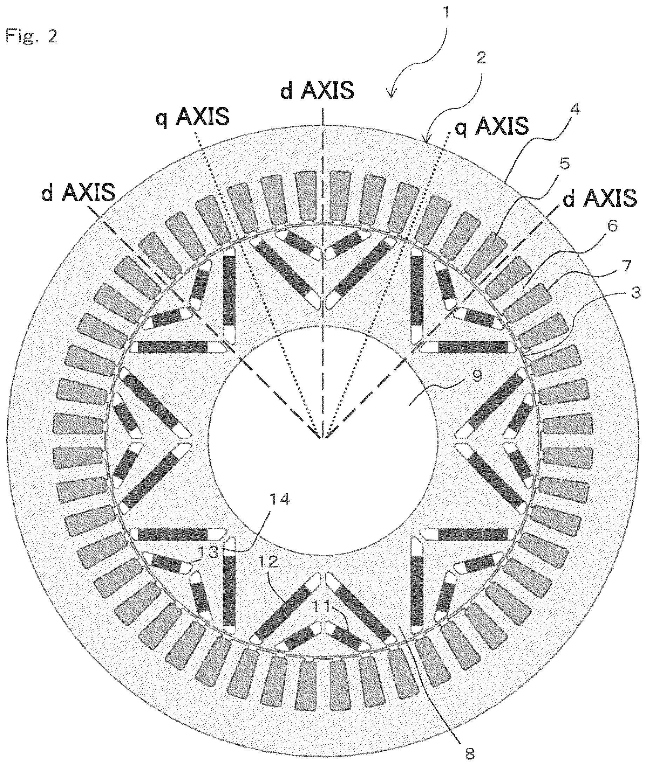

Hereinafter, a first embodiment will be described with reference to FIGS. 1 to 8. As illustrated in FIG. 2, a rotating electrical machine 1 is used as a power generator mounted in an electric vehicle or a hybrid vehicle, for example. The rotating electrical machine 1 includes an annular stator 2 and a rotor 3 that is rotatably disposed in an inner space, which is a magnetic field space of the stator 2.

The stator 2 includes a stator core 4 and three-phase stator windings 5 that is wound around the stator core 4. The stator core 4 is formed into an annular shape by stacking a plurality of steel plates and integrally bonding them. The stator core 4 includes forty eight teeth 6 projecting on the side of an inner circumferential portion in the radial direction, for example, and forty eight slots 7 between adjacent teeth 6. Each of the three-phase stator windings 5 is wound around the slots 7 to cover a plurality of teeth 6.

The rotor 3 includes a rotor core 8, a rotation shaft 9 that is provided at the center of the rotor core 8, and a plurality of permanent magnets 11 and 12 for forming magnetic poles that are embedded in the rotor core 8. In this case, a rotation direction of the rotor 3 is the counterclockwise direction in FIG. 2. The rotor core 8 is formed into a cylindrical shape by stacking and integrating a plurality of annular steel plates. The rotation shaft 9 is inserted into a hole at the center of the rotor core 8 and is coupled to the rotor core 8 such that the rotation shaft 9 integrally rotates therewith. A gap with a predetermined dimension is formed between the outer circumferential surface of the rotor core 8 and the inner circumferential surface of the stator core 4, that is, an end surface of a tip end of each of the teeth 6.

Magnet insertion hole portions 13 and 14, which are each paired, are provided at equal intervals at eight locations, for example, in the circumferential direction in the rotor core 8. Therefore, the number of the provided magnet insertion hole portions 13 and 14, which are each paired, is eight. The magnet insertion hole portions 13 are formed on the side of the outer circumference of the rotor core 8, while the magnet insertion hole portions 14 are formed on the side of the inner circumference to surround the magnet insertion hole portions 13.

Each pair of magnet insertion hole portions 13 is formed into a V shape when seen from the side of the outer circumferential portion of the rotor core 8 such that a facing distance gradually increases toward the side of the outer circumferential portion in the radial direction. Each magnet insertion hole portion 13 extends in the axial direction of the rotor core 8. Each permanent magnet 11 is inserted into and fixed to each magnet insertion hole portion 13. Each permanent magnet 11 has a section with a flat rectangular shape and has a plate shape extending in the axial direction of the rotor core 8. Each pair of two permanent magnets 11 is disposed in a V shape when seen from the rotation center of the rotor core 8.

The same polarity on the side of the outer circumferential portion is set for each pair of two permanent magnets 11. Also, a polarity on the side of the outer circumferential portion of a certain pair of two permanent magnets 11 and polarities on the side of the outer circumferential portion of two permanent magnets 11 that are present next to the certain pair of permanent magnets 11 differ from each other. Therefore, each pair of two permanent magnets 11 forms one magnetic pole, and eight magnetic poles are formed in the rotor 3. Here, a straight line connecting the center between two permanent magnets 11 to the rotation center of the rotor 3 in each magnetic pole formed by each pair of two permanent magnets 11 is a d axis, that is, a magnetic pole center axis. Also, a straight line connecting the center between two adjacent magnetic poles to the rotation center of the rotor 3 is a q axis.

The magnet insertion hole portions 14 and the permanent magnets 12, which are each paired, are disposed on the side closer to the inner circumference than the magnet insertion hole portions 13 and the permanent magnets 11 such that the lengths of the magnet insertion hole portions 14 and the permanent magnets 12 are longer than those of the magnet insertion hole portions 13 and the permanent magnets 11 and V shape opening angles are smaller than those of the magnet insertion hole portions 13 and the permanent magnets 11. Also, both end portions of each of the magnet insertion hole portions 13 and 14 are hollows that are not filled with the permanent magnets 11 and 12, and the hollows serve as flux barriers.

As illustrated in FIG. 1, the rotor 3 of the present embodiment is characterized in that a first magnetic resistance portion 16 is formed on the d axis and a pair of second magnetic resistance portions 17 and 17 is formed with the d axis sandwiched therebetween, on the side of the outer circumference of the rotor core 8. The shapes of the magnetic resistance portions 16 and 17 are circular shapes in the present embodiment. Hereinafter, the reason that the magnetic resistance portions 16 and 17 are formed in this manner will be described.

In simulation results shown below, the first magnetic resistance portion 16 will be referred to as a hole (1), and the second magnetic resistance portions 17 will be referred to as holes (2). The numbers in parentheses are numbers in circles in the drawing. First, an overview will be described. An effect of reducing an electromagnetic vibration force by providing each of the holes (1) and (2) was confirmed on simulation through comparison between a case where the hole (1) was provided on the d axis and a case where the holes (2) provided symmetrically with respect to the d axis were filled with iron. Note that the order is an order of a ripple component of the electromagnetic vibration force.

-Effect of hole (1): The electromagnetic vibration force was reduced by 1.7%, of which a twenty fourth component was reduced by 21.3% (a decrease in torque: 0.2%).
- Effect of holes (2): The electromagnetic vibration force was reduced by 25.8%, of which the twenty fourth component worsened by 2.4% (a decrease in torque: 0.5%).
- Effect of holes (1) + (2): The electromagnetic vibration force was reduced by 21.5%, of which the twenty fourth component was reduced by 22.2% (a decrease in torque: 0.8%)

Note that in a method of forming a large number of grooves in the outer circumferential surface of the rotor core as in the related art, the electromagnetic vibration force was reduced by 10.0%, of which the twenty fourth component worsened by 35.0% (a decrease in torque: 1.6%). It was possible to ascertain that the electromagnetic vibration force containing the twenty fourth component was able to be reduced while a decrease in torque was suppressed even without providing grooves that led to worsening of wind noise and a windage loss, by providing the holes (1) and (2) in this manner.

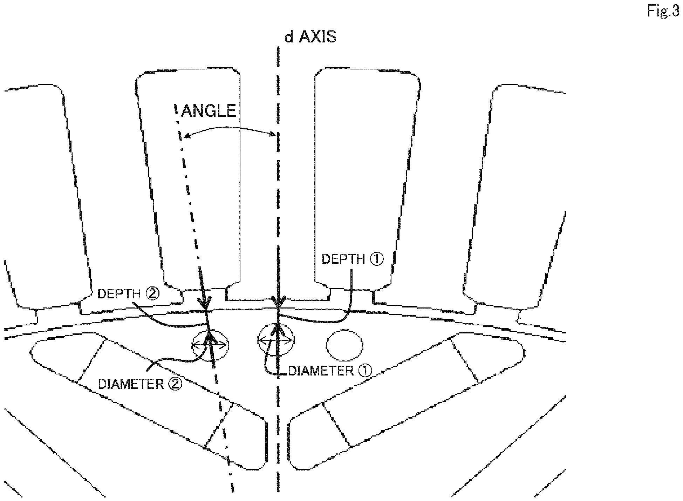

Hereinafter, more detailed description will be given. First, as illustrated in FIG. 3, simulation was conducted by changing a depth (1) and a diameter (1) of the hole (1), a depth (2) and a diameter (2) of the holes (2), and an angle from the rotation center forming each hole (2) to the d axis. Here, the "depths" indicate the distances from the outer circumferential surface of the rotor core 8 to the outer circumferences of the hole (1) and the holes (2). Note that the two holes (2) are assumed to be formed symmetrically. In the drawing, each of (a), (b), and (c) added to the simulation results indicates the following properties.
(a): a ripple component of an electromagnetic vibration force
(b): an average value of twenty fourth, forty eighth, and ninety sixth components of the electromagnetic vibration force
(c): an average torque

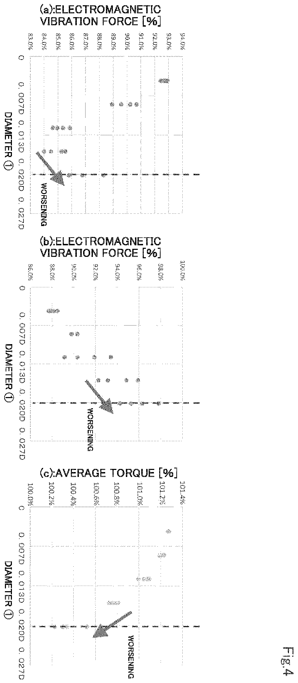

Here, the diameter of the rotor core 8 is defined as D. As illustrated in FIG. 4, it is possible to ascertain that when the diameter (1) was changed from less than 0.07D to about 0.020D, no significant changes were observed in (b) while properties of (a) and (c) worsened at 0.020D.

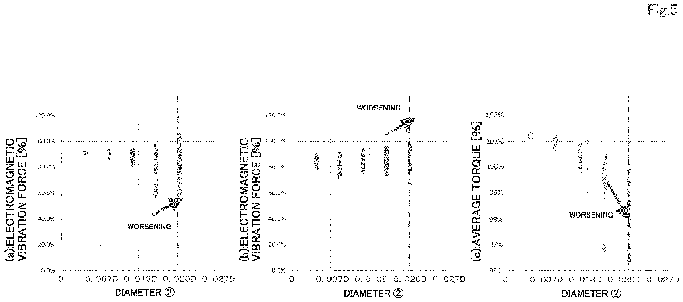

As illustrated in FIG. 5, it is possible to ascertain that when the diameter (2) was similarly changed, no significant changes were observed in (b) and (c) while the properties of (a) worsened at 0.020D.

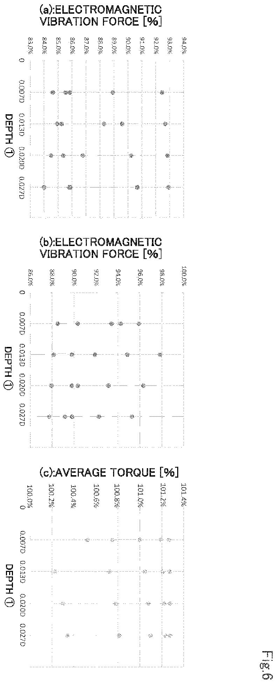

As illustrated in FIG. 6, no significant changes were observed in all of (a) to (c) even when the depth (1) was changed from 0.07D to 0.027D.

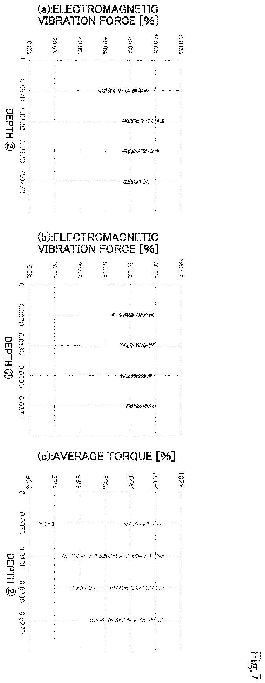

As illustrated in FIG. 7, no significant changes were observed in all of (a) to (c) similarly to the depth (1) even when the depth (2) was changed from 0.07D to 0.027D.

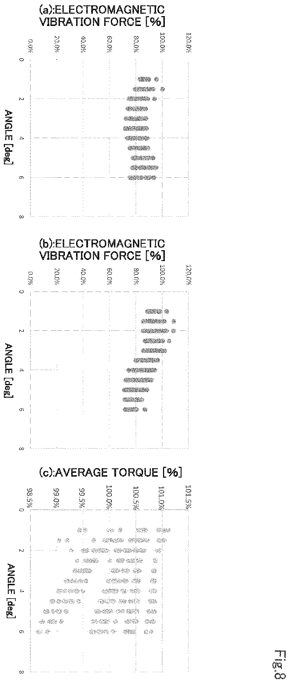

As illustrated in FIG. 8, no significant changes were observed in all of (a) to (c) even when the angle at which the holes (2) were provided was changed to 1 degree to 6 degrees. As a result of considering the above, it is possible to state that it is desirable to set the diameters of the hole (1) and the holes (2) to less than 0.020D with respect to the diameter D of the rotor core 8. In other words, when each of the areas of the hole (1) and the holes (2) is defined as S, it is only necessary to set the area S to satisfy S < π(0.01D)².

As described above, according to the present embodiment, the rotor 1 includes the rotor core 8 in which the permanent magnets 11 and 12 are embedded, the first magnetic resistance portion 16 formed on the side of the outer circumferential surface on the d axis of the rotor core, and the pair of second magnetic resistance portions 17 that is formed on the side of the outer circumferential surface to sandwich the d axis therebetween. It is thus possible to reduce an electromagnetic vibration force without increasing wind noise and a windage loss and to minimize a decrease in output torque. Moreover, it is possible to further enhance the above effects by setting the diameters of the magnetic resistance portions 16 and 17 to less than 0.020D with respect to the diameter D of the rotor core 8.

### (Second Embodiment)

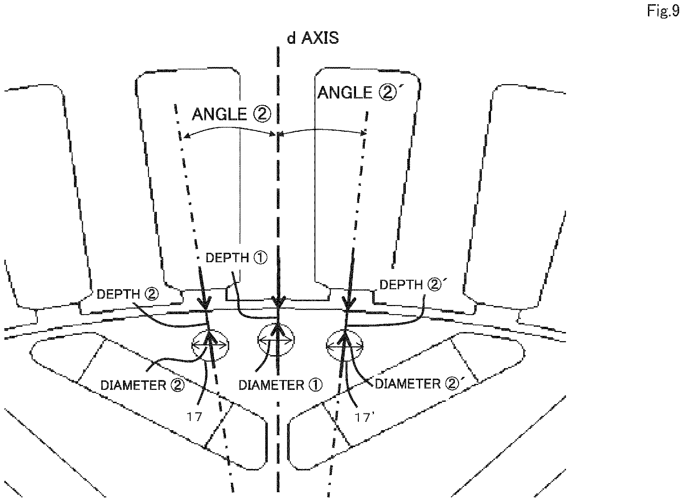

Hereinafter, the same parts as those in the first embodiment will be denoted by the same reference signs, description thereof will be omitted, and different parts will be described. In a second embodiment, simulation of a case where two holes (2) were formed asymmetrically was conducted. As illustrated in FIG. 9, a diameter, a depth, and an angle corresponding to a second magnetic resistance portion 17' are denoted as (2)'. In each of the following diagrams, an electromagnetic vibration force that is equal to or less than 0.8 times as strong as that before the hole (1), the hole (2), and the hole (2)' was added to the rotor core 8 is plotted, and an average torque and an average value of twenty fourth, forty eighth, and ninety sixth components of the electromagnetic vibration force are shown together.

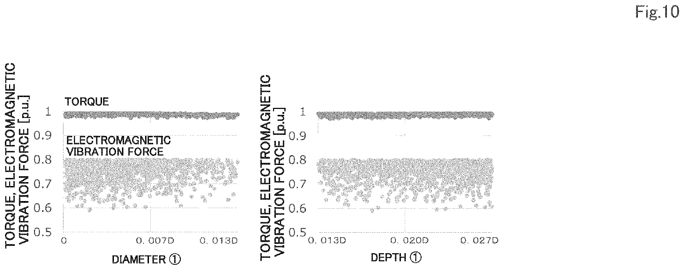

As illustrated in FIG. 10, no characteristic trends were observed in both the torque and the electromagnetic vibration force even when the diameter (1) was changed from 0 to about 0.013D and the depth (1) was changed from 0.013D to about 0.027D.

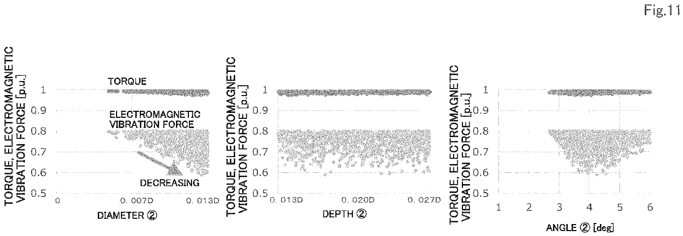

As illustrated in FIG. 11, a trend that the electromagnetic vibration force decreased was observed when the diameter (2) was changed from less than 0.007D to about 0.013D. No characteristic trends were observed in both the torque and the electromagnetic vibration force even when the depth (2) was changed from 0.013D to about 0.027D, similarly to the depth (1). Although a trend that the electromagnetic vibration force decreased was observed when the angle (2) was changed from less than 3 degrees to about 6 degrees, a decreasing angle differed for each order when the individual orders were separately observed.

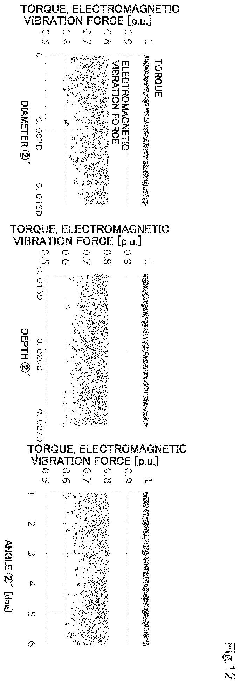

As illustrated in FIG. 12, no characteristic trends were observed in both the torque and the electromagnetic vibration force even when the diameter (2)' and the depth (2)' were changed similarly to the diameter (2) and the depth (2) and the angle (2)' was changed from 1 degree to about 6 degrees.

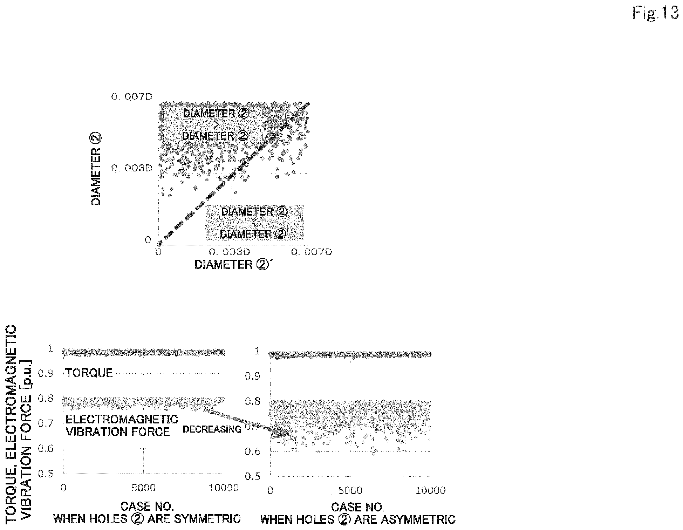

As illustrated in FIG. 13, it is possible to ascertain that more plots are distributed in a region where the diameter (2) > the diameter (2)' is satisfied in comparison based on a size relationship between the diameter (2) and the diameter (2)'. The drawing also shows the plots in the case where the shapes of the holes (2) are symmetric and the case where the shapes of the holes (2) are asymmetric, and it is possible to ascertain that a higher effect of reducing the electromagnetic vibration force is achieved in the case where the shapes of the holes (2) are asymmetric. In other words, it is possible to state that it is desirable to set the diameter of the hole (2) on the side of the rotation direction of the rotor 1 to be longer than the diameter of the hole (2)'.

As described above, according to the second embodiment, it is possible to further enhance the effect by setting the diameter of the magnetic resistance portion 17 on the side of the rotation direction with respect to the d axis to be longer than the diameter of the magnetic resistance portion 17' on the side of the counter rotation direction.

### (Third Embodiment)

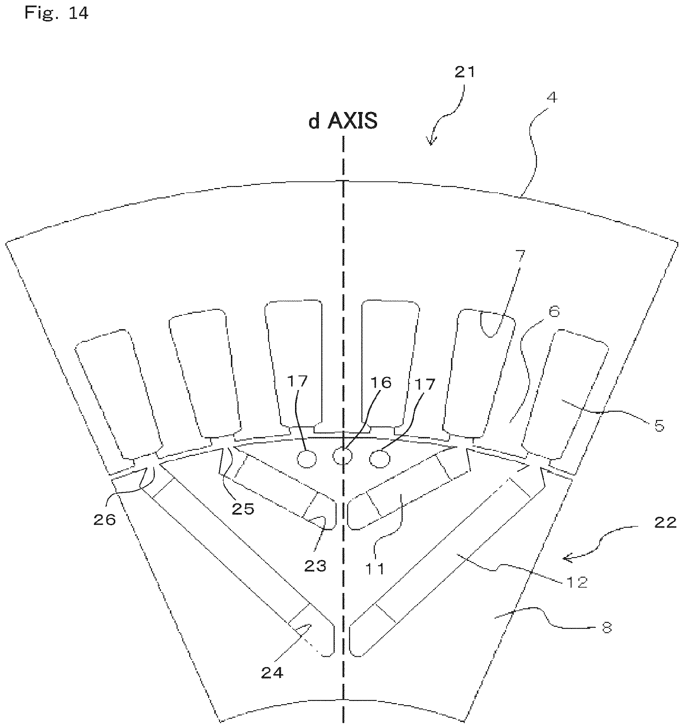

As illustrated in FIG. 14, a rotor 21 of a third embodiment includes a rotor core 22 instead of the rotor core 8. The rotor core 22 includes magnet insertion hole portions 23 and 24 instead of the magnet insertion hole portions 13 and 14. The shapes of the magnet insertion hole portions 23 and 24 are so-called top bridgeless structures by groove portions 25 and 26 opened on the side of the outer circumferential surface of the rotor core 22 being formed. With such a configuration, it is possible to improve an output torque of a rotating electrical machine.

### (Other Embodiments)

The first magnetic resistance portion may be disposed such that at least a part thereof overlaps the d axis.

Two or more first magnetic resistance portions may be provided, and two or more pairs of second magnetic resistance portions may be provided.

The shapes of the magnetic resistance portions are not limited to circular shapes.

The permanent magnets may be provided in one layer or three or more layers.

The number of magnetic poles is not limited to eight.

## Claims

1. A rotor having a rotor core in which permanent magnets are embedded,
**characterized in that** the rotor having at least one first magnetic resistance portion that is formed on a side of an outer circumferential surface on a magnetic pole center axis of the rotor core; and
at least a pair of second magnetic resistance portions that is formed on the side of the outer circumferential surface such that the second magnetic resistance portions sandwich the magnetic pole center axis.

2. The rotor according to claim 1, wherein when a diameter of the rotor core is defined as D, and an area of each of the first magnetic resistance portion and the second magnetic resistance portions is defined as S, S < π(0.01D)² is satisfied.

3. The rotor according to claim 1 or 2, wherein as areas of the pair of second magnetic resistance portions, the area of the second magnetic resistance portion formed on a side of a rotation direction with respect to the magnetic pole center axis is set to be larger than the area of the other second magnetic resistance portion.
